# FASCICULE DE BREVET EUROPEEN

(11) **EP 0 978 161 B1**
(45) Date de publication et mention de la délivrance du brevet: **06.02.2002**
(21) Numéro de dépôt: 98921549.6
(22) Date de dépôt: 16.04.1998
(51) Int. Cl.: H02K 21/04, H02K 1/27

(54) **MACHINE ELECTRIQUE A DOUBLE EXCITATION PERFECTIONNEE**
ELEKTRISCHE MASCHINE MIT VERBESSERTER DOPPELERREGUNG
IMPROVED ELECTRICAL MACHINE WITH DOUBLE EXCITATION

(30) Priorité: 23.04.1997 FR 9705030
(43) Date de publication de la demande: 09.02.2000
(73) Titulaire: CENTRE NATIONAL DE LA RECHERCHE SCIENTIFIQUE (CNRS), 75016 Paris (FR)
(72) Inventeur: LUCIDARME, Jean, F-91700 Saint Geneviève des Bois (FR); BEN AHMED, Abdelhamid, F-94100 Saint Maur (FR); GABSI, Mohammed, F-94230 Cachan (FR); MULTON, Bernard, F-35200 Rennes (FR); SANTANDER, Eduardo, F-94320 Thiais (FR); HOANG, Emmanuel, F-75001 Paris (FR); LECRIVAIN, Michel, F-94200 Ivry sur Seine (FR)
(74) Mandataire: Jacobson, Claude
(86) Numéro de dépôt international: FR9800771
(87) Numéro de publication internationale: WO9848502

(56) Documents cités:
- DE-A- 4 115 887
- FR-A- 2 189 909
- US-A- 3 573 519
- ZMOOD R ET AL: "HIGH PERFORMANCE MAGNETIC BEARINGS SUITABLE FOR NOISE CANCELLATION IN PERMANENT MAGNET MOTOR DRIVEN PUMPS" PROCEEDINGS OF THE INTERSOCIETY ENERGY CONVERSION ENGINEERING CONFERENCE (IECEC), BOSTON, AUG. 4 - 9, 1991, vol. 4, 4 août 1991, pages 198-202, XP000312816 INSTITUTE OF ELECTRICAL AND ELECTRONICS ENGINEERS

## Description

La présente invention concerne les machines électriques tournantes et se rapporte plus particulièrement aux machines synchrones telles que les alternateurs pour véhicules automobiles, les moteurs de traction ou autres.

Parmi les machines connues, on peut citer les machines à excitation par bobinages montés dans le rotor, les machines à excitation par aimants montés dans le rotor et les machines à double excitation par bobinages et aimants montés dans le rotor.

De telles machines sont notamment décrites dans la demande de brevet FR-A-2 761 211 déposée le 20 mars 1997 par la Demanderesse.

Bien que donnant des résultats acceptables, les machines à double excitation connues sont d'un encombrement relativement important en raison de la présence de bagues collectrices et de balais.

Le document DE-A-4 115 887 décrit une machine électrique tournante à double excitation selon l'art antérieur ne comportant ni balais, ni collecteur.

L'invention vise à créer une machine électrique tournante du type à double excitation qui tout en ayant de bonnes performances soit d'un encombrement réduit par rapport aux machines connues du même type.

Elle a donc pour objet une machine électrique tournante comprenant monté sur un arbre, un rotor dont le circuit magnétique porte au moins un élément d'excitation et un stator dont le circuit magnétique porte un bobinage statorique, caractérisée en ce que ledit au moins un élément d'excitation du rotor comprend au moins un aimant annulaire associé à au moins deux disques munis chacun de dents radiales régulièrement réparties à leur périphérie et au moins une pièce annulaire munie de lumières dans chacune desquelles est engagée sans contact une dent d'au moins d'un disque denté, et en ce que le circuit magnétique du stator comporte un nombre pair, au moins égal à deux, d'éléments annulaires de circuit magnétique, au moins un bobinage d'excitation statorique étant agencé entre au moins deux éléments voisins parmi lesdits éléments de circuit magnétique.

L'invention sera mieux comprise à l'aide de la description qui va suivre, donnée uniquement à titre d'exemple et faite en se référant aux dessins annexés, sur lesquels :
- la Fig.1 est une vue schématique partielle en coupe d'une machine électrique tournante élémentaire à double excitation suivant l'invention;
- la Fig.2 est une vue schématique partielle en coupe d'une variante de la machine élémentaire de la figure 1;
- la Fig.3 est une vue schématique partielle en coupe d'une machine électrique à double excitation complète réalisée à partir de la machine élémentaire de la figure 1;
- la Fig.4 est une vue partielle en coupe d'une machine électrique à double excitation résultant de la juxtaposition de plusieurs machines élémentaires de la figure 1;
- la Fig.5 est une vue schématique partielle en coupe d'une machine à double excitation de type particulier;
- la Fig.6 est une coupe suivant la ligne 6-6 de la machine de la figure 5 sans son stator;
- la Fig.7 est une vue partielle en coupe d'une machine à double excitation à bobinage d'excitation statorique déporté dans le rotor; et
- la Fig.8 est une vue schématique partielle en coupe d'une machine électrique à double excitation suivant l'invention résultant de la juxtaposition d'une machine de la figure 7 et de machines similaires à celle de la figure 3.

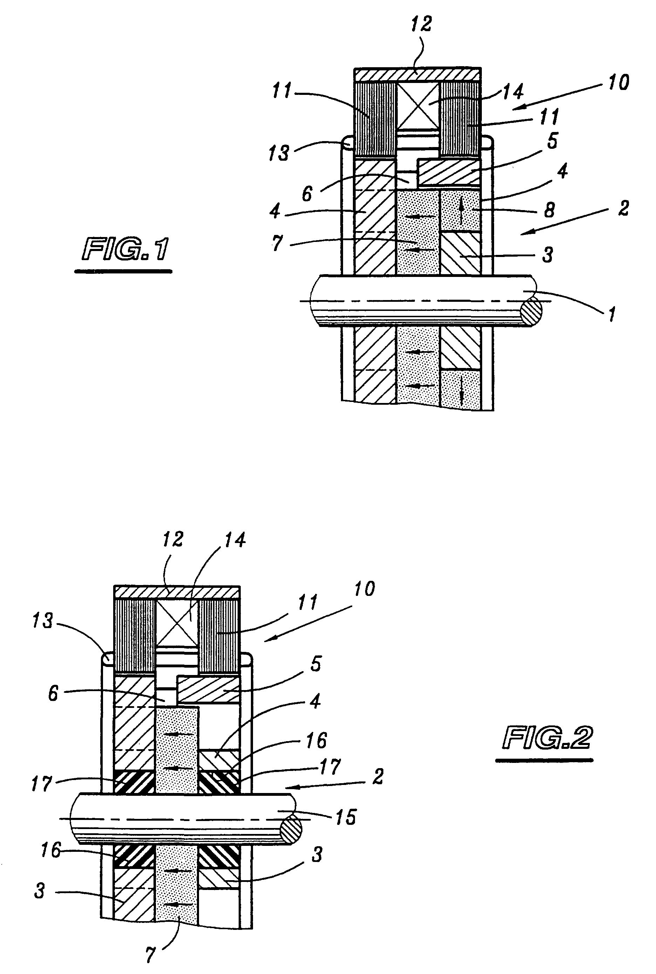

La machine électrique représentée à la figure 1 est une machine comprenant montée sur un arbre 1 en matériau amagnétique, un rotor 2 dont le circuit magnétique comporte des disques dentés 3 pourvus de dents radiales 4 régulièrement réparties à leur périphérie.

Les dents radiales 4 d'un flasque 3 sont décalées par rapport aux dents radiales de l'autre flasque, de manière qu'une dent d'un flasque se trouve en regard d'un intervalle entre les dents de l'autre flasque.

Une pièce annulaire 5 pourvue de lumières 6 régulièrement espacées à sa périphérie qui dans le présent exemple sont réalisées sous la forme d'encoches axiales, qui débouchent aux extrémités opposées de la pièce annulaire est montée de façon coaxiale par rapport à l'arbre 1. Les dents 4 des disques dentés 3 sont engagées dans des lumières 6 correspondantes de la pièce annulaire 5 sans contact avec les parois desdites lumières. La pièce annulaire 5 est fixée à l'arbre 1 par tout moyen mécanique approprié (non représenté).

Entre les disques dentés 3 est disposé un aimant annulaire d'excitation 7.

Par ailleurs, dans l'exemple représenté à la figure 1, dans les intervalles entre les dents 4 des disques dentés 3, et les parois des lumières 6 correspondantes de la pièce annulaire 5, sont disposés des aimants 8 .

Toutefois, les intervalles entre les dents 4 peuvent également être dépourvus de tels aimants.

Le rotor 2 est entouré par un stator 10 comprenant un circuit magnétique feuilleté formé de deux éléments de circuit magnétique 11 assemblés entre eux par une culasse annulaire extérieure 12 et sur lequel est monté un bobinage d'induit 13. Entre les éléments de circuit magnétique 11 est disposé un bobinage d'excitation 14.

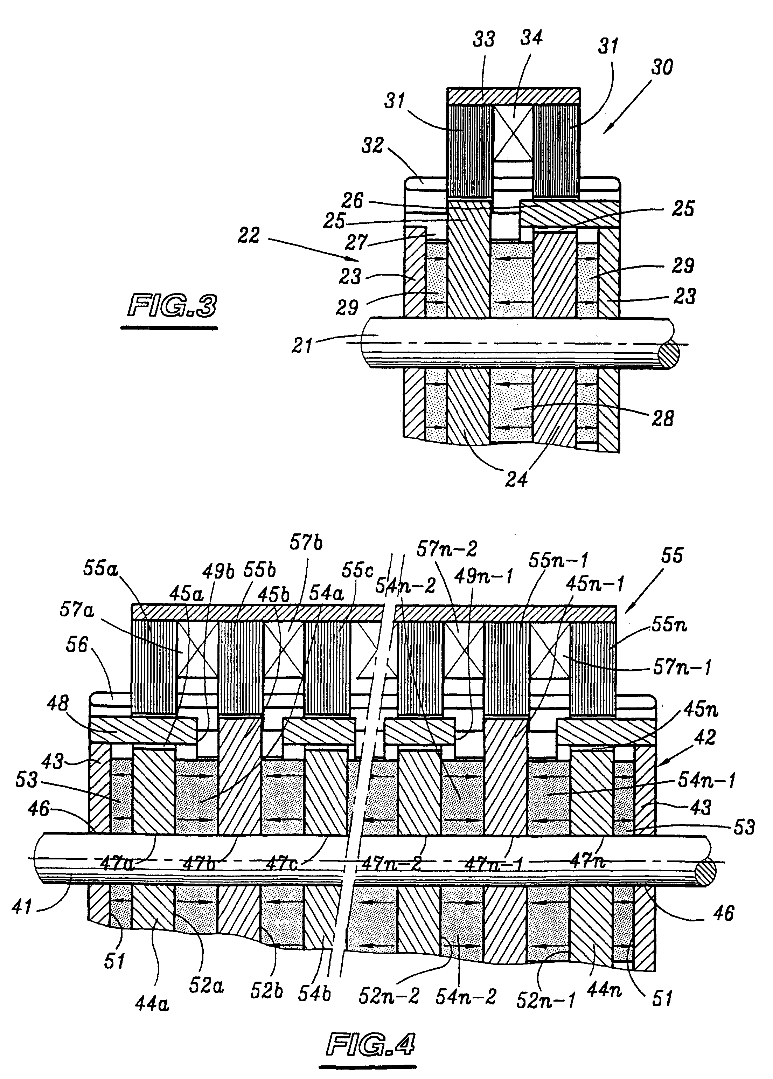

La machine électrique représentée à la figure 2 est en tout point semblable à celle de la figure 1 à l'exception du fait qu'elle comporte un arbre 15 en matériau magnétique et que de ce fait, les disques dentés 3 présentent chacun un alésage central 16 assurant leur séparation magnétique par rapport à l'arbre 15.

Dans chaque alésage central 16 est avantageusement disposée une bague en matériau isolant 17.

En outre, dans le présent mode de réalisation, les intervalles entre les dents 4 des disques dentés 3 et les parois des lumières 6 de la pièce annulaire 5 sont dépourvus d'aimants.

La machine électrique représentée à la figure 3, comporte un arbre 21 en matériau amagnétique portant un rotor 22 qui comporte deux flasques d'extrémité 23 entre lesquels sont disposés deux disques dentés 24 pourvus de dents radiales 25 disposées à des intervalles angulaires réguliers, les dents de l'un des disques étant décalés angulairement par rapport aux dents de l'autre disque.

Sur les flasques d'extrémité 23 est montée une pièce annulaire 26 munie de lumières 27 qui dans le présent exemple sont des encoches axiales et dans lesquelles sont engagées sans contact les dents 25 des disques dentés 24.

Entre les disques dentés 24 d'une part, et entre chaque disque denté et le flasque d'extrémité 23 correspondant d'autre part, sont disposés des aimants d'excitation 28,29.

L'aimant d'excitation 28 disposé entre les disques dentés 24 et les aimants d'excitation 29 disposés entre chaque disque denté et son flasque d'extrémité 23 correspondant, sont de polarités inverses.

Le rotor ainsi constitué est entouré par un stator 30 comprenant un circuit magnétique formé de deux éléments de circuit magnétique 31, disposés chacun en regard d'un disque denté 24 correspondant et sur lesquels est monté un bobinage statorique 32.

Les éléments de circuit magnétique 31 sont réunis entre eux par une culasse 33. Entre les éléments de circuit magnétique 31 est disposé un bobinage d'excitation 34.

La machine électrique représentée à la figure 4 résulte de la juxtaposition de plusieurs machines élémentaires telles que celle représentée à la figure 1.

Elle comporte un arbre commun 41 en matériau amagnétique qui porte un rotor 42 formé de deux flasques d'extrémité 43 et de disques dentés 44a à 44n, n étant un nombre pair au moins égal à deux.

Chacun des disques dentés 44a à 44n comporte des dents 45a à 45n décalées les unes par rapport aux autres.

Les flasques d'extrémité 43 et les disques dentés 44a à 44n, comportent des alésages 46 et 47a à 47n traversés par l'arbre amagnétique 41. Un mode avantageux de construction consiste à réaliser cette pièce annulaire par assemblage de n pièces annulaires élémentaires coaxiales. Sur les flasques d'extrémité 43 est montée une pièce annulaire 48 ajourée de lumières 49a à 49n régulièrement réparties à sa périphérie, décalées les unes par rapport aux autres. Les dents 45a à 45n des disques dentés 44a à 44n sont engagés dans les lumières 49a à 49n correspondantes sans contact avec celles-ci.

Dans les intervalles prévus entre les flasques d'extrémité 43 et les disques dentés 44a à 44n, définissant avec l'arbre 41 et la pièce ajourée 48 formant chemise assemblée sur les flasques d'extrémité, d'une part deux chambres d'extrémité 51 situées entre le premier flasque d'extrémité 43 et le disque denté voisin 44a et entre le second flasque d'extrémité 43 et le disque denté voisin 44n et d'autre part des chambres 52a à 52n-1 situées entre les disques dentés 44a à 44n, sont disposés des aimants annulaires 53 et 54a à 54n-1 respectivement.

La disposition de ces aimants annulaires est telle que les polarités des deux aimants voisins sont de signes ou de polarités contraires.

Les aimants d'excitation 53 situés dans les chambres d'extrémité 51 ont une épaisseur égale à la moitié de celle des aimants 54a à 54n-1 situés dans les chambres 52a à 52n-1 définies entre les disques dentés 44a à 44n successifs.

Le rotor qui vient d'être décrit est monté dans un stator 55 présentant autant d'éléments de circuit magnétique 55a à 55n que le rotor comporte de disques dentés 44a à 44n. Un bobinage statorique d'induit commun 56 est monté sur ces éléments de circuit magnétique.

Entre deux éléments de circuits magnétiques voisins successifs est disposé un bobinage d'excitation 57a à 57n-1 correspondant.

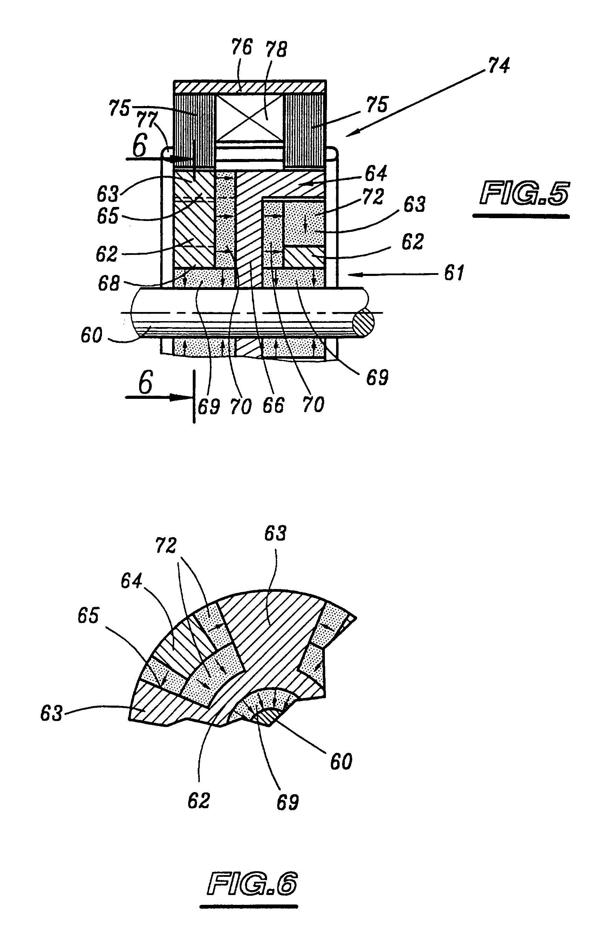

La machine électrique représentée à la figure 5 comporte un arbre 60 en matériau magnétique sur lequel est monté un rotor 61 comprenant deux disques dentés 62 dont les dents radiales 63 sont régulièrement réparties à la périphérie de chaque disque, les dents de l'un des disques étant décalées par rapport à celles de l'autre.

L'arbre 60 porte en outre une pièce annulaire 64 munie de lumières telles que la lumière 65 qui, dans le présent mode de réalisation sont constituées par des encoches axiales et dans lesquelles sont engagées sans contact les dents 63 des disques dentés 62.

La pièce annulaire 64 est reliée à l'arbre 61 par une âme centrale 66 en forme de disque.

Les disques dentés 62 présentent chacun un alésage 68 entourant l'arbre 60 dans lequel sont disposés des aimants annulaires 69.

Entre l'âme 66 et chacun des disques dentés 62, sont également disposés des aimants 70 tandis que, comme représenté à la figure 6, les intervalles entre les dents 63 de chacun des disques dentés 62 et les parois des encoches 65 de la pièce annulaire 64 sont garnis d'aimants 72.

Les intervalles entre les dents 63 des pièces dentées 62 et les parois des encoches 65 de chaque pièce annulaire 64, peuvent également être dépourvus de tels aimants.

Le rotor qui vient d'être décrit est entouré par un stator 74 qui comporte un circuit magnétique formé de deux éléments de circuit magnétique 75 annulaires feuilletés, assemblés par une culasse extérieure 76 et portant un enroulement d'induit 77.

Entre les éléments de circuit magnétique 75 est en outre prévu un bobinage d'excitation 78.

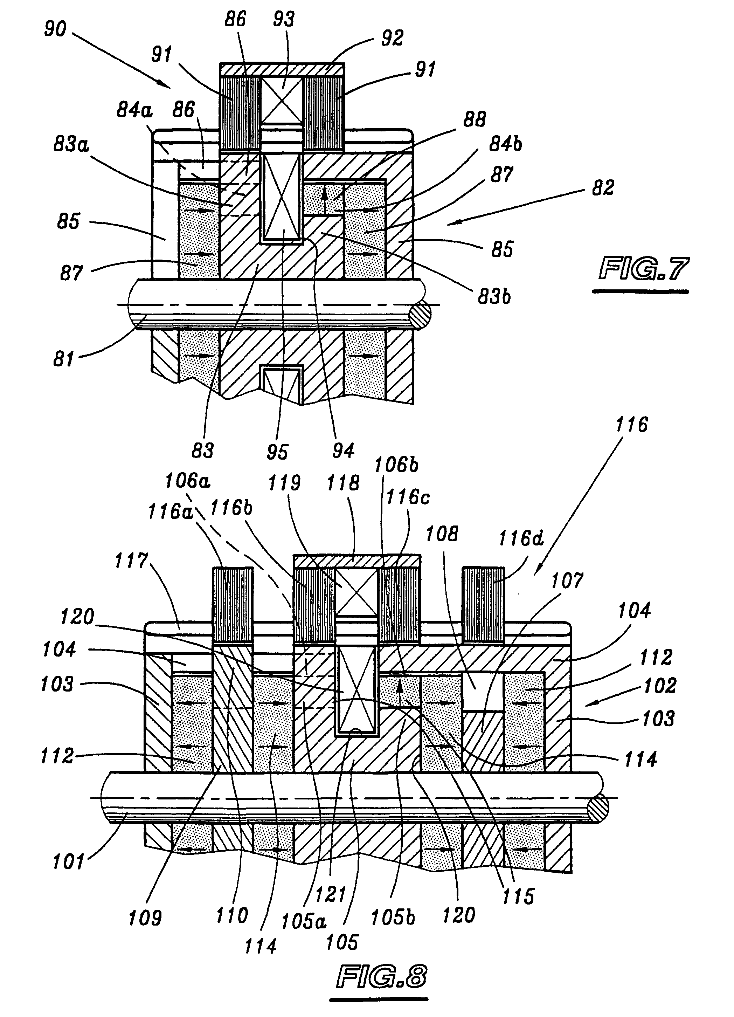

La machine représentée à la figure 7 comporte un arbre amagnétique 81 qui porte un rotor 82 formé d'un double disque denté 83 monté sur l'arbre 81 et pourvu de dents radiales 84a, 84b ménagées sur chacun des éléments 83a, 83b du double disque denté qui définissent ainsi deux disques dentés. Les dents 84b sont décalées angulairement par rapport aux dents 84a.

De part et d'autre du double disque denté 83, sont montés des flasques d'extrémité 85 pourvus de dents définissant entre elles des encoches axiales 86 dans lesquelles sont engagées sans contact les dents radiales 84a et 84b du double disque denté 83.

Les flasques d'extrémité 85 munis de dents axiales définissant des pièces annulaires analogues à celles des modes de réalisation décrits précédemment.

Entre les flasques d'extrémité 85 et les extrémités opposées du double disque denté 83, sont placés des aimants annulaires d'excitation 87.

En outre, dans les espaces laissés libres entre les dents 86 des flasques d'extrémité 85 et les dents 84a, 84b du double disque denté 83, sont disposés des aimants 88.

Les aimants 88 peuvent également être omis.

Le rotor ainsi constitué est entouré par un stator 90 comprenant un circuit magnétique formé de deux éléments de circuit magnétique feuilletés 91 disposés chacun en regard d'un des éléments 83a,83b du double disque denté 83 et réunis extérieurement par une culasse 92.

Entre les deux éléments de circuit magnétique 91 est disposé un bobinage d'excitation 93.

Dans le double disque denté 83 du rotor 82 est ménagée une gorge 94 dans laquelle est disposé un second bobinage statorique d'excitation 95.

Selon une variante, la machine représentée à la figure 7 peut comporter uniquement un bobinage d'excitation tel que le bobinage 93 situé entre les éléments de circuit magnétique 91 du stator, ou bien encore un seul bobinage d'excitation tel que le bobinage 95 disposé dans la gorge annulaire 94 du double disque denté 83.

La machine électrique représentée à la figure 8 résulte de la juxtaposition d'une machine électrique à double excitation du type représenté à la figure 7 et d'une machine élémentaire telle que décrite en référence à la figure 3.

Elle comporte un arbre 101 en matière amagnétique qui porte un rotor 102 comprenant des flasques d'extrémité 103 pourvus de dents définissant entre elles des encoches axiales 104 régulièrement réparties à leur périphérie, dirigées les unes vers les autres pour former deux pièces ou cages annulaires ajourées.

Entre les flasques d'extrémité 103 en matière magnétique, sont disposés des disques dentés intermédiaires formés par un double disque denté central 105 dont un élément 105a comporte des dents radiales 106a et dont un second élément 105b comporte des dents radiales 106b. Les dents 106a, 106b des premier et second éléments 105a, 105b du double disque denté 105 sont régulièrement réparties à la périphérie du double disque et décalées angulairement les unes par rapport aux autres.

De part et d'autre du double disque denté 105, dont les éléments 105a,105b forment des disques dentés intermédiaires, le rotor 102 comporte un premier disque denté 107 muni de dents radiales 108 et un second disque denté 109 muni de dents radiales 110. Les dents 108 et 110 des disques dentés 107 et 109 sont régulièrement réparties à la périphérie des disques correspondants et décalées angulairement.

Dans les encoches axiales 104 des flasques d'extrémité 103 sont engagées respectivement les dents 106a de l'un des éléments 105a du double disque denté 105 et les dents 108 du premier disque denté 107 voisin, d'une part, et les dents 106b de l'autre élément 105b du double disque denté 105 et les dents 110 second du disque denté 109 correspondant d'autre part.

Dans les espaces laissés libres entre les dents 106a et 106b, des éléments 105a et 105b du double disque denté et les encoches 104 des flasques d'extrémité 103 sont disposés des aimants 115.

Entre les flasques d'extrémité 103 et les premier et second disques dentés 107,109 d'une part, et entre ceux-ci et le double disque denté 105 d'autre part, sont intercalés des aimants annulaires d'excitation 112,114.

Le rotor ainsi constitué est entouré par un stator 116 comprenant un circuit magnétique formé de quatre éléments de circuit magnétique 116a, 116b, 116c, 116d et sur lequel est monté un bobinage statorique d'induit 117. Chacun des éléments de circuit annulaire 116a à 116d est disposé en regard des dents radiales d'un disque denté 107, 109 et de chacun des éléments 105a, 105b du double disque denté 105.

Les éléments de circuit magnétique 116b, 116c qui sont disposés en regard des deux éléments 105a, 105b du double disque denté 105, sont réunis par une culasse extérieure 118. Entre les éléments du circuit magnétique 116b et 116c est disposé un bobinage d'excitation statorique 119.

Par ailleurs, un autre bobinage statorique 120 est placé dans une gorge annulaire 121 ménagée dans le circuit magnétique du rotor entre les deux éléments 105a, 105b du double disque denté 105.

En raison de l'agencement de ce bobinage d'excitation statorique à l'intérieur d'une gorge ménagée dans le corps du rotor, la machine décrite en référence à la figure 8 présente un encombrement réduit par rapport à celui des machines à double excitation connues. Elle est de plus, avec la machine de la figure 7, la moins encombrante des machines suivant l'invention.

## Revendications

1. Machine électrique tournante du type à double excitation montée sur un arbre comprenant un rotor (2;33;42;61;82;102) dont le circuit magnétique porte au moins un élément d'excitation et un stator (10;30;55;74; 90;116) dont le circuit magnétique porte un bobinage statorique, **caractérisée en ce que** ledit au moins un élément d'excitation comprend au moins un aimant annulaire (7;28,29;51,54a,...54n-1; 70;87;112,114) associé à au moins deux disques (3;24;44a,....44n; 62;83a,83b; 105a, 105b, 107, 109) munis chacun de dents radiales régulièrement réparties à leur périphérie et au moins une pièce annulaire (5;26;48;64;86;104) munie de lumières dans chacune desquelles est engagée sans contact, une dent d'au moins un disque denté, et **en ce que** le circuit magnétique du stator comporte un nombre pair, au moins égal à deux, d'éléments annulaires de circuit magnétique (11;31;55a,...55n; 75;91;116a,116b,116c,116d) au moins un bobinage d'excitation statorique (14;34; 57a, ... 57n-1; 78;93,95;119,120) étant agencé entre au moins deux éléments voisins parmi lesdits éléments de circuit magnétique.

2. Machine électrique suivant la revendication 1, **caractérisée en ce que** le rotor comporte deux disques dentés (3;24;62;83a,83b) à dents radiales (4;25;63;84a,84b) décalées angulairement les unes par rapport aux autres et engagées sans contact dans des encoches axiales (6;27;65;86) de ladite au moins une pièce annulaire (5;26; 64;85) et le stator comporte un circuit magnétique formé de deux éléments de circuits magnétiques (11;31;75;91) réunis par une culasse extérieure (12;33;76;92) et entre lesquels est agencé au moins un bobinage d'excitation statorique (14;34;78;93,95).

3. Machine électrique suivant la revendication 2, **caractérisée en ce qu'**elle comporte un bobinage statorique d'excitation (14;34;78) disposé entre les éléments de circuit magnétique (11;31;75) du stator.

4. Machine électrique suivant la revendication 2, **caractérisée en ce qu'**elle comporte un bobinage d'excitation statorique (93) disposé entre les éléments de circuit magnétique (91) du stator et un bobinage d'excitation (95) déporté dans le rotor.

5. Machine électrique suivant la revendication 2, **caractérisée en ce qu'**elle comporte un bobinage d'excitation associé aux éléments de circuit magnétique du stator et déporté dans le rotor.

6. Machine électrique suivant l'une des revendications 2 et 3, **caractérisée en ce qu'**elle comporte une pièce annulaire (5;26;64) munie de lumières en forme d'encoches axiales (6; 27;65) dans lesquelles sont engagées sans contact les dents (4;25;63) des disques dentés (3;24;62) correspondants.

7. Machine électrique suivant la revendication 6, **caractérisée en ce que** l'arbre (21) du rotor est en matériau amagnétique et la pièce annulaire (26) est portée par des flasques d'extrémité (23) disposés de part et d'autre des disques dentés (24) sur l'arbre (21) du rotor.

8. Machine électrique suivant la revendication 6, **caractérisée en ce que** l'arbre (60) du rotor est en matériau magnétique et la pièce annulaire (64) est reliée à l'arbre (60) du rotor par une âme centrale (66) en forme de disque.

9. Machine électrique suivant l'une des revendications 2 à 5, **caractérisée en ce qu'**elle comporte deux pièces annulaires comprenant chacune un flasque d'extrémité (85) pourvu de dents définissant entre elles des encoches axiales (86) dans lesquelles sont engagées sans contact les dents (84a,84b) de disques dentés (83a,83b) correspondants entre lesquels est logé ledit bobinage d'excitation (95) déporté dans le rotor (82).

10. Machine électrique suivant la revendication 9, **caractérisée en ce que** les disques dentés sont réalisés sous la forme d'un double disque denté (83) monté sur l'arbre (81) du rotor et comprenant deux éléments dentés (83a,83b) pourvus de dents radiales (84a,84b) engagées sans contact dans les encoches axiales (86) des pièces annulaires correspondantes, et **en ce que** le bobinage d'excitation statorique (95) est disposé dans une gorge (94) ménagée entre lesdits éléments (83a,83b) du double disque denté (83).

11. Machine électrique suivant les revendications 2 et 9 prises ensemble, **caractérisée en ce qu'**elle comporte un arbre en matière amagnétique (101) qui porte un rotor (102) comprenant des flasques d'extrémité (103) pourvus de dents définissant entre elles des encoches axiales (104) régulièrement réparties à leur périphérie, dirigées les unes vers les autres et formant deux pièces annulaires ajourées, les dents radiales (106a,106b,108,110) des disques dentés (105a,105b,107,109) étant engagées sans contact dans lesdites encoches axiales (104) et un stator (116) entourant le rotor et comportant un circuit magnétique formé d'éléments de circuits magnétiques (116a, 116b, 116c,116d) en nombre égal au nombre de disques dentés du rotor, au moins un bobinage d'excitation statorique (119,120) étant interposé entre les éléments de circuit magnétique (116b,116c) situés en regard de deux disques dentés intermédiaires (105a,105b) du rotor et réunis par une culasse extérieure (118).

12. Machine électrique suivant la revendication 11, **caractérisée en ce que** les deux disques dentés intermédiaires sont réalisés sous la forme d'un double disque denté (105) comprenant un premier et un second éléments dentés (105a, 105b) pourvus chacun de dents radiales (106a,106b) et entre lesquels est ménagée une gorge (121) dans laquelle est disposé un bobinage d'excitation statorique (120) déporté dans le rotor, la machine comprenant en outre de part et d'autre du double disque denté (105) un premier disque denté (107) muni de dents radiales (108) et un second disque denté (109) muni de dents radiales (110) engagées dans les encoches axiales (104), des pièces annulaires respectivement avec les dents radiales (106a) du premier élément (105a) et avec les dents radiales (106b) du second élément (105b) du double disque denté (105), des aimants annulaires (112,,114) étant intercalés entre les flasques d'extrémité (103) et les premier et second disques dentés (107,109) d'une part et entre ceux-ci et le double disque denté (105) d'autre part.

13. Machine électrique suivant l'une des revendications 1 à 12, **caractérisée en ce que** dans les espaces entre les dents radiales (4;63;84a,84b;106a,106b) des disques dentés (3;62;83a,83b;105a;105b) et les parois des lumières de ladite au moins une pièce annulaire (5;64;85;103) sont disposés des aimants (8;72;88;115).

## Patentansprüche

1. Elektrische Doppelerregungsdrehmaschine zur Anbringung auf einer Welle, aufweisend einen Rotor (2; 33; 42; 61; 82; 102), dessen Magnetkreis zumindest ein Erregungselement trägt, und einen Stator (10; 30; 55; 74; 90; 116), dessen Magnetkreis eine Statorwicklung trägt, **dadurch gekennzeichnet, dass** das zumindest eine Erregungselement zumindest einen Ringanker (7; 28; 29; 51; 54a,...54n-1; 70; 87; 112; 114) umfasst, dem zumindest zwei Scheiben (3; 24; 44a,...44n; 62; 83a;83b; 105a; 105b) zugeordnet sind, die jeweils mit radialen Zähnen versehen sind, die regelmäßig über ihre Peripherie beabstandet sind, und zumindest ein Ringtell (5; 26; 48; 64; 86; 104), das mit Durchbrüchen versehen ist, in denen jeweils kontaktfrei ein Zahn von zumindest einer Zahnscheibe eingreift, und dass der Magnetkreis des Stators eine gerade Anzahl, zumindest zwei Magnetkreisringelemente (11; 31; 55a, ... 55n; 75; 91; 116a, 116b, 116c, 116d) umfasst, wobei zumindest eine Statorerregungswicklung (14; 34; 57a, ... 57n-1; 78; 93, 95; 119, 120) zwischen zumindest zwei benachbarten Elementen von den Magnetkreiselementen angeordnet ist.

2. Elektrische Maschine nach Anspruch 1, **dadurch gekennzeichnet, dass** der Rotor zwei Zahnscheiben (3; 24; 62; 83a, 83b) mit radialen Zähnen (4; 25; 63; 84a, 84b) umfasst, die in bezug aufeinander winkelmäßig versetzt sind und kontaktfrei in axiale Kerben (6; 27; 65; 86) des zumindest einen Ringteils (5; 26; 64; 85) eingreifen, und dass der Stator einen Magnetkreis umfasst, der aus zwei Magnetkreiselementen (11; 31; 75; 91) gebildet ist, die durch ein externes Joch (12; 33; 76; 92) vereinigt sind, und zwischen denen zumindest eine Statorerregungswicklung (14; 34; 78; 93, 95) angeordnet ist.

3. Elektrische Maschine nach Anspruch 2, **dadurch gekennzeichnet, dass** sie eine Statorerregungswicklung (14; 34; 78) umfasst, die zwischen den Magnetkreiselementen (11; 31; 75) des Stators angeordnet ist.

4. Elektrische Maschine nach Anspruch 2, **dadurch gekennzeichnet, dass** sie eine Statorerregungswicklung (93) umfasst, die zwischen den Magnetkreiselementen (91) des Stators angeordnet ist, und eine Erregungswicklung (95), die in den Rotor verlagert ist.

5. Elektrische Maschine nach Anspruch 2, **dadurch gekennzeichnet, dass** sie eine Erregungswicklung umfasst, der Magnetkreiselemente des Stators zugeordnet sind, und die in den Rotor verlagert ist.

6. Elektrische Maschine nach Anspruch 2 oder 3, **dadurch gekennzeichnet, dass** sie ein Ringteil (5, 26, 64) umfasst, das mit Durchbrüchen in Gestalt von axialen Kerben (6, 27, 75) versehen ist, in die Zähne (4, 25, 63) der entsprechenden Zahnscheiben (3, 24, 62) kontaktfrei eingreifen.

7. Elektrische Maschine nach Anspruch 6, **dadurch gekennzeichnet, dass** die Welle (21) des Rotors aus unmagnetischem Material besteht, und dass das Ringteil (26) durch Endflansche (23) getragen ist, die beiderseits der Zahnscheiben (24) auf der Welle (21) des Rotors angeordnet sind.

8. Elektrische Maschine nach Anspruch 6, **dadurch gekennzeichnet, dass** die Welle (60) des Rotors aus Magnetmaterial besteht, und dass das Ringteil (64) mit der Welle (60) des Rotors durch einen zentralen Steg (66) in Form einer Scheibe verbunden ist.

9. Elektrische Maschine nach einem der Ansprüche 2 bis 5, **dadurch gekennzeichnet, dass** sie zwei Ringteile umfasst, die jeweils einen Endflansch (85) aufweisen, der mit Zähne versehen ist, die untereinander axiale Kerben (86) festlegen, in die kontaktfrei die Zähne (84a, 84b) von entsprechenden Zahnscheiben (83a, 83b) kontaktfrei eingreifen, zwischen denen die Erregungswicklung (95) angeordnet ist, die in den Rotor (82) verlagert ist.

10. Elektrische Maschine nach Anspruch 9, **dadurch gekennzeichnet, dass** die Zahnscheiben in Form einer doppelten Zahnscheibe (63) verwirklicht sind, die auf der Welle (81) des Rotors angeordnet ist und zwei Zahnelemente (83a, 83b) aufweist, die mit radialen Zähnen (84a, 84b) versehen sind, die in die axialen Kerben (86) der entsprechenden Ringteile kontaktfrei eingreifen, und dass die Statorerregungswicklung (95) in einer Nut (94) angeordnet Ist, die zwischen den Elementen (83a, 83b) der doppelten Zahnscheibe (83) ausgebildet ist.

11. Elektrische Maschine nach Anspruch 2 und 9, **dadurch gekennzeichnet, dass** sie eine Welle aus unmagnetischem Material (101) umfasst, die einen Rotor (102) trägt, der Endflansche (103) aufweist, die mit Zähnen versehen sind, die untereinander axiale Kerben (104) festlegen, die an ihrer Peripherie regelmäßig beabstandet sind, die aufeinander zugerichtet sind, und die zwei durchbrochene Ringteile bilden, wobei die radialen Zähne (106a, 106b, 108, 110) der Zahnscheiben (105a, 105b, 107, 109) in die axialen Kerben (104) kontaktfrei eingreifen, und einen Stator (116), der den Rotor umgibt und einen Magnetkreis aufweist, der aus Magnetkreiselementen (116a, 116b, 116c, 116d) der gleichen Anzahl wie die Anzahl der Zahnscheiben des Rotors gebildet ist, wobei zumindest eine Statorerregungswicklung (119, 120) zwischen den Magnetkreiselementen (116b, 116c) angeordnet ist, die relativ zu zwei Zwischenzahnscheiben (105a, 105 des Rotors angeordnet und durch ein externes Joch (118) verbunden bzw. vereinigt sind.

12. Elektrische Maschine nach Anspruch 11, **dadurch gekennzeichnet, dass** die zwei Zwischenzahnscheiben in Form einer Doppelzahnscheibe (105) verwirklicht sind, die erste und zweite Zahnelemente (105a, 105b) aufweist, die jeweils mit radialen Zähnen (106a, 106b) versehen sind, und zwischen denen eine Nut (121) gebildet ist, in welcher eine in den Rotor verlagerte Statorerregungswicklung angeordnet ist, wobei die Maschine außerdem beiderseits der Doppelzahnscheibe (105) eine erste Zahnscheibe (107) aufweist, die mit radialen Zähnen (108) versehen ist, und eine zweite Zahnscheibe (109), die mit radialen Zähnen (110) versehen ist, die in die axialen Kerben (104) eingreifen, und Ringelemente, jeweils mit radialen Zähnen (106a) des ersten Elements (105a) und mit den radialen Zähnen (106b) des zweiten Elements (105b) der Doppelzahnscheibe (105), wobei Ringmagnete (112, 114) zwischen den Endflanschen (103) und den ersten und zweiten Zahnscheiben (107, 109) einerseits und andererseits zwischen diesen und der Doppelzahnscheibe (105) vorgesehen sind.

13. Elektrische Maschine nach einem der Ansprüche 1 bis 12, **dadurch gekennzeichnet, dass** in den Räumen zwischen den radialen Zähnen (4; 63; 84a; 106a, 106b) der Zahnscheiben (3; 62; 83a, 83b; 105a; 105b) und den Wänden der Durchbrüche des zumindest einen Ringteils (5; 64; 85; 103) Magnete (8; 72; 88; 115) angeordnet sind.

## Claims

1. Rotating electrical machine of the double excitation type mounted on a shaft which has a rotor (2; 33; 42; 61; 82; 102) whereof the magnetic circuit carries at least one excitation element, and a stator (10; 30; 55; 74; 90; 116) whereof the magnetic circuit carries a stator coil, **characterised in that** at least one excitation element has at least one ring-shaped magnet (7; 28; 29; 51, 54a, .... 54n-1; 70; 87; 112; 114) associated with at least two discs (3; 24; 44a, ....44n; 62; 83a, 83b; 105a, 105b, 107, 109), each provided with radial teeth spaced regularly at their periphery and at least one ring-shaped part (5; 26; 48; 64; 86; 104) provided with slots in each of which there is contactlessly engaged one tooth of at least one toothed disc, and by the fact that the magnetic circuit of the stator has an even number, not fewer than two, of magnetic circuit ring-shaped parts (11; 31; 55a,...55n; 75; 91; 116a, 116b, 116d), at least one excitation stator coil (14; 34; 57a,...57n-1; 78; 93; 95; 119, 120) being arranged between at least two neighbouring elements among the said magnet circuit elements.

2. Electrical machine according to Claim 1, **characterised by** the fact that the rotor has two toothed discs (3; 24; 62; 83a, 83b) with radial teeth (4; 25; 63; 84a, 84b) staggered at an angle to each other and contactlessly engaged in axial notches (6; 27; 65; 86) of at least one said ring-shaped part (5; 26; 64; 85) and the stator has a magnetic circuit formed of two magnetic circuit elements (11; 31; 75; 91) joined by an outside yoke (12; 33; 76; 92) between which is arranged at least one excitation stator coil (14; 34; 78; 93; 95).

3. Electrical machine according to Claim 2, **characterised in that** it has an excitation stator coil (14; 34; 78) arranged between the magnetic circuit elements (11; 31; 75) of the stator.

4. Electrical machine according to Claim 2, **characterised in that** it has an excitation stator coil (93) arranged between the magnetic circuit elements (91) of the stator and an excitation coil (95) offset in the rotor.

5. Electrical machine according to Claim 2, **characterised in that** it has an excitation coil associated with the magnetic circuit elements of the stator and offset in the rotor.

6. Electrical machine according to one of the Claims 2 and 3, **characterised in that** it has a ring-shaped part (5; 26; 64) provided with slots in the form of axial notches (6; 27; 65) in which are contactlessly engaged the teeth (4; 25; 63) of the corresponding toothed discs (3; 24; 62).

7. Electrical machine according to Claim 6, **characterised in that** the rotor shaft (21) is made from amagnetic material and the ring-shaped part (26) is carried by the end flange plates (23) arranged on either side of the toothed discs (24) on the rotor shaft (21).

8. Electrical machine according to Claim 6, **characterised in that** the rotor shaft (60) is made from magnetic material and the ring-shaped part (64) is connected to the rotor shaft (60) by a disc-shaped centre core (66).

9. Electrical machine according to one of the Claims 2 to 5, **characterised in that** it has two ring-shaped parts each consisting of an end flange plate (85) provided with teeth defining between them axial notches (86) in which are contactlessly engaged the corresponding teeth (84a, 84b) of toothed discs (83a, 83b) between which is housed the said excitation coil (95) offset in the rotor (82).

10. Electrical machine according to Claim 9, **characterised in that** the toothed discs are made in the form of a double toothed disc (83) mounted on the rotor shaft (81) and comprising two toothed elements (83a, 83b) provided with radial teeth (84a, 84b) contactlessly engaged in the axial notches (86) of the corresponding ring-shaped parts, and by the fact that the excitation stator coil (95) is arranged in a groove (94) made between the said elements (83a, 83b) of the double toothed disc (83).

11. Electrical machine according to Claims 2 and 9 taken together, **characterised in that** it has a shaft made from amagnetic material (101) which carries a rotor (102) which has end flange plates (103) provided with teeth which between them define axial notches (104) spaced regularly at their periphery, directed towards one another and forming two ring-shaped parts with openings in them, the radial teeth (106a, 106b, 108, 110) of the toothed discs (105a, 105b, 107, 109) being contactlessly engaged in the said axial notches (104) and a stator (116) surrounding the rotor and having a magnetic circuit formed of magnetic circuit elements (116a), 116b, 116c, 116d) equal in number to the number of toothed discs of the rotor, at least one excitation stator coil (119, 120) being inserted between the magnetic circuit elements (116b, 116c) located opposite two intermediate toothed discs (105a, 105b) of the rotor and joined by an external yoke (118).

12. Electrical machine according to Claim 11, **characterised in that** the two intermediate toothed discs are made in the form of a double toothed disc (105) comprising a first and a second toothed element (105a, 105b), each provided with radial teeth (106a, 106b) and between which a groove (121) is made in which is arranged an excitation stator coil (120) offset in the rotor, the machine also having, on either side of the double toothed disc (105) a first toothed disc (107) which has radial teeth (108) and a second toothed disc (109) which has radial teeth (110) engaged in the axial notches (104), ring-shaped parts respectively with the radial teeth (106a) of the first element (105a) and with the radial teeth (106b) of the second element (105b) of the double toothed disc (105), ring-shaped magnets (112, 114) being inserted between the end flange plates (103) and the first and second toothed discs (107, 109) on the one hand, and between them and the double toothed disc (105) on the other.

13. Electrical machine according to one of the Claims 1 to 12, **characterised in that** magnets (8; 72; 88; 115) are arranged in the spaces between the radial teeth (4; 63; 84a, 84b; 106a, 106b) of the toothed discs (3; 62; 83a, 83b; 105a; 105b) and the walls of the slots of at least one said ring-shaped part (5; 64; 85; 103).
